# EUROPEAN PATENT APPLICATION

(11) **EP 3 372 863 A1**
(43) Date of publication of application: **12.09.2018**
(21) Application number: 16861855.1
(22) Date of filing: 23.09.2016
(51) Int. Cl.: F16F 9/36, F15B 20/00, F16J 15/00, F16J 15/18

(54) **LIQUID LEAK DETECTION DEVICE**

(30) Priority: 04.11.2015 JP 2015216298
(71) Applicant: KYB Corporation, Tokyo 105-6111 (JP)
(72) Inventor: OOKI, Norikazu, Tokyo 105-6111 (JP)
(74) Representative: MFG Patentanwälte Meyer-Wildhagen Meggle-Freund Gerhard PartG mbB
(86) International application number: PCT/JP2016/078028
(87) International publication number: WO 2017/077786

(57) **Abstract**

A liquid leakage detection device according to the present invention includes a sliding contact member (S) that includes an elastic portion (10), is movable with respect to a cylinder (1) filled with liquid in an axial direction, and is in sliding contact with an outer periphery of a rod (2) movable into/out from the cylinder (1), and a detection part (D) configured to detect deformation of the elastic portion (10) of the sliding contact member (S).

## Description

### Technical Field

The present invention relates to improvement of a liquid leakage detection device.

### Background Art

In a hydraulic cylinder or the like having a cylinder and a rod moving into/out from the cylinder, the outer periphery of the rod is sealed with a main seal to prevent leakage of hydraulic oil from the inside of the cylinder. When a hydraulic cylinder or the like is used for a long period of time, the sealing performance of the main seal may be deteriorated or the outer periphery of the rod may be damaged, so that a small amount of hydraulic oil may leak from the cylinder.

As disclosed in, for example, JPH06207608(A), a liquid leakage detection device for automatically detecting leakage of hydraulic oil may be provided with a funnel-shaped receiving portion under the cylinder end to retain hydraulic oil leaked from the outer periphery of the rod in a bottomed tubular measuring section and measure a leakage amount per unit time. When the leakage amount per unit time exceeds an allowable value, the liquid leakage detection device determines that liquid leakage has occurred and notifies the occurrence of liquid leakage.

### Summary of the Invention

Since liquid leakage affects operation of hydraulic equipment, detection of liquid leakage as early as possible is desired. However, in the conventional liquid leakage detection device, the minimum amount of hydraulic oil required for measuring the leakage amount has to be retained in the measuring section. Thus, it takes time to detect liquid leakage and early detection is not possible.

In addition, the conventional liquid leakage detection device is adapted to measure an actual leakage amount of the hydraulic oil and then determine leakage afterwards. Thus, the conventional liquid leakage detection device cannot recognize condition of the outer periphery of the rod and the main seal, and thus cannot predict liquid leakage.

The present invention is made to overcome the disadvantages and an object thereof is to provide a liquid leakage detection device capable of finding liquid leakage early and also predicting liquid leakage.

Therefore, a liquid leakage detection device of the present invention includes a sliding contact member that includes an elastic portion and is in sliding contact with an outer periphery of a rod, and a detection part configured to detect deformation of the elastic portion of the sliding contact member.

### Brief Description of Drawings

Fig. 1 is a schematic sectional view of a shock absorber to which a liquid leakage detection device according to a first embodiment is applied.
Fig. 2 is an enlarged sectional view of the liquid leakage detection device according to the first embodiment.
Fig. 3 is an enlarged sectional view of a liquid leakage detection device according to a modification of the first embodiment.
Fig. 4 is an enlarged sectional view of a liquid leakage detection device according to another modification of the first embodiment.
Fig. 5 is a view illustrating operation of the liquid leakage detection device according to the first embodiment.
Fig. 6 is an enlarged sectional view of a liquid leakage detection device according to a second embodiment.
Fig. 7 is a plan view of a sliding contact member in the liquid leakage detection device according to the second embodiment.
Fig. 8 is a view illustrating operation of the liquid leakage detection device according to the second embodiment.

### Description of Embodiments

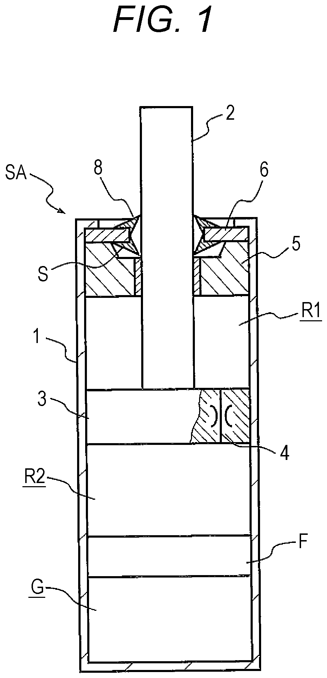

Hereinafter, the present invention will be described based on embodiments illustrated in the drawings. A liquid leakage detection device of the present invention is applied to a shock absorber SA. As illustrated in Fig. 1, the shock absorber SA includes a tubular cylinder 1, a rod 2 moving in/out from the cylinder 1 in the axial direction with respect to the cylinder 1, and a piston 3 that is slidably inserted in the cylinder 1 and connected to the rod 2. In the shock absorber SA of this example, the cylinder 1 is filled with hydraulic oil as liquid.

More specifically, the interior of the cylinder 1 in the shock absorber SA is divided into two pressure chambers R1 and R2 by the piston 3 that is slidably inserted in the cylinder 1 and connected to the rod 2. The pressure chambers R1 and R2 are filled with hydraulic oil. The piston 3 is formed with an attenuation flow passage 4 that communicates the two pressure chambers R1 and R2, and this attenuation flow passage 4 is formed to provide resistance to the flow of hydraulic oil passing therethrough. Therefore, during expansion and contraction in which the rod 2 moves relative to the cylinder 1, the shock absorber SA provides resistance to the flow of hydraulic oil flowing between the pressure chambers R1 and R2 through the attenuation flow passage 4 to make pressure difference between the pressure chambers R1 and R2 so as to generate damping force. In order to compensate the volume of the rod 2 moving into/out from the cylinder 1, the shock absorber SA is provided with a gas chamber G under the pressure chamber R2 formed by a free piston F slidably inserted in the cylinder 1. The volume of the rod 2 may be compensated by providing a reservoir outside the cylinder 1 although not illustrated.

### <First Embodiment>

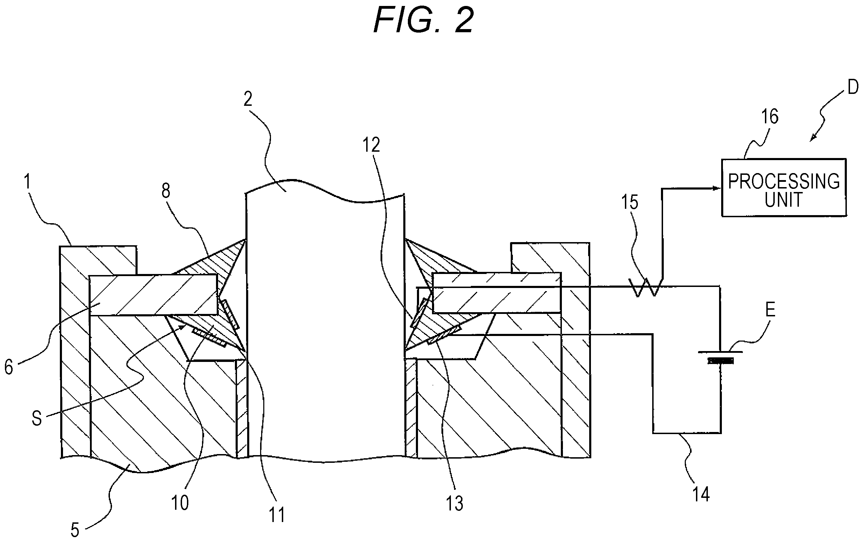

As illustrated in Fig. 2, a liquid leakage detection device according to a first embodiment includes a sliding contact member S and a detection part D. The sliding contact member S is provided on an inner periphery of an annular core metal 6 overlaid on an annular rod guide 5 fixed to the cylinder 1 of the shock absorber SA.

In order to guide movement of the rod 2 in the axial direction with respect to the cylinder 1, the rod guide 5 is provided at the tube end of the cylinder 1, the core metal 6 is overlaid on the upper side of the rod guide 5 in Fig. 2, and the core metal 6 is fixed to the cylinder 1 together with the rod guide 5.

The sliding contact member S includes an annular elastic portion 10 fixedly mounted on the inner peripheral side of the core metal 6 and an annular tip end portion 11 extending from the inner periphery of the elastic portion 10 and being in sliding contact with the outer periphery of the rod 2. In this case, both the elastic portion 10 and the tip end portion 11 are formed from an elastic pressure-sensitive conductive rubber. The pressure-sensitive conductive rubber is obtained by mixing particles of a conductive material such as carbon, metal or the like into a rubber material, and dispersing the particles in the rubber to add pressure-sensitive conductivity to rubber that is insulator. The electric resistance changes by deforming the pressure-sensitive conductive rubber.

In this example, the sliding contact member S has a shape such that a longitudinal section from the opposite side from the rod side of the elastic portion 10 to the tip end of the tip end portion 11 tapers toward the rod side, so that the entire sliding contact member S is easily deformed by the change in the contact resistance between the rod 2 and the tip end of the tip end portion 11. That is, the sliding contact member S is shaped such that the tip end portion 11 side is tapered toward the rod 2 side. The contact resistance between the sliding contact member S and the rod 2 includes not only the frictional force between the sliding contact member S and the rod 2 but also the resistance that prevents relative movement of the sliding contact member S and the rod 2 in the axial direction due to the irregularities on the sliding contact surfaces of the sliding contact member S and the rod 2.

On the upper side of the inner periphery of the core metal 6 in Fig. 2, a dust seal 8 is provided. The dust seal 8 is in sliding contact with the outer periphery of the rod 2 at a position outer of the cylinder than the sliding contact surface of the sliding contact member S to scrape off foreign matters such as mud, dust, and the like adhering to the outer periphery of the rod 2, and to prevent such foreign matters from entering into the cylinder 1. Although the dust seal 8 is formed from a material different from that of the sliding contact member S, the dust seal 8 may be integrally molded with the sliding contact member S from a pressure-sensitive conductive rubber similar to a material of the sliding contact member S and may be provided on the core metal 6. When the dust seal 8 and the sliding contact member S are formed integrally, machining becomes easy.

The detection part D includes annular electrodes 12 and 13 mounted on both the cylinder side and the opposite cylinder side of the elastic portion 10 of the sliding contact member S, an electric circuit 14 having a power source E that applies a voltage to the annular electrodes 12 and 13, a current sensor 15 that detects a current in the electric circuit 14, and a processing unit 16 that processes a signal output from the current sensor 15.

The tip end portion 11 of the sliding contact member S is in contact with the outer peripheral surface of the rod 2 to provide initial deformation to the elastic portion 10. When the elastic portion 10 is deformed from this state and the deflection amount of the elastic portion 10 changes, the electric resistance in the elastic portion 10 sandwiched between the annular electrodes 12 and 13 changes. Change in the electric resistance of the elastic portion 10 changes a current value detected by the current sensor 15.

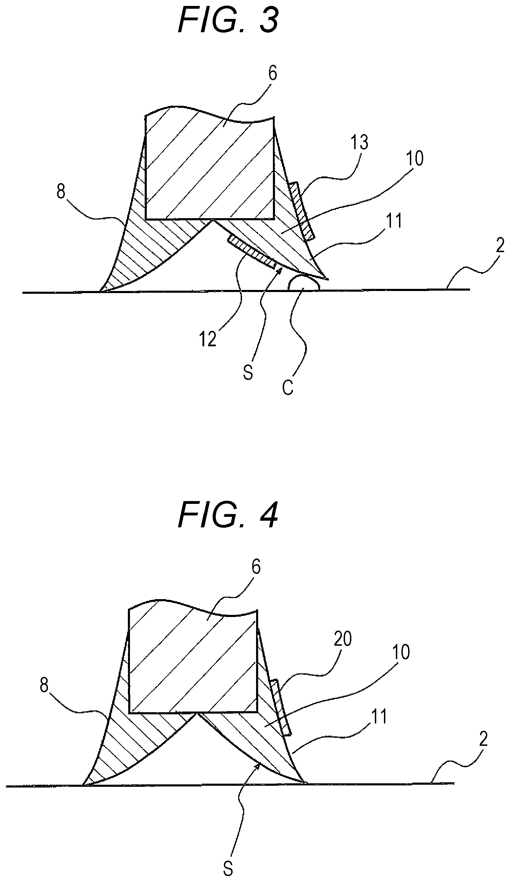

The processing unit 16 determines whether liquid leakage is present based on the change in the current value detected by the current sensor 15 due to the deformation of the elastic portion 10. For example, when the rod 2 enters into the cylinder 1, a foreign matter C adhered to the outer peripheral surface of the rod 2 passes over the dust seal 8 and also passes through the sliding contact member S as illustrated in Fig. 3. Then, when the foreign matter C moves to the inside of the cylinder 1 together with the rod 2 and the tip end portion 11 comes into contact with the foreign matter C, the tip end portion 11 is pushed away by the foreign matter C and pushed to the upper right as illustrated in Fig. 3, and thus the elastic portion 10 is also elastically deformed. If the foreign matter C does not pass as described above, the tip end portion 11 is only in sliding contact with the outer peripheral surface of the rod 2, and there is almost no change in the deflection amount of the elastic portion 10 from the initial deflection amount even when the rod 2 moves in the axial direction with respect to the cylinder 1. Therefore, the current sensor 15 detects a stable certain current without large variation if the foreign matter C does not pass through the sliding contact member S, but the current value varies when the foreign matter C passes through the sliding contact member S. Thus, by setting the current value detected by the current sensor 15 when the elastic portion 10 is deformed due to the passage of the foreign matter C as a threshold value in advance, the passage of the foreign matter C adhered to the outer periphery of the rod 2 through the sliding contact member S, which is a main seal, can be detected. The passage of the foreign matter C through the sliding contact member S, which is the main seal, then scratches the contact surface of the sliding contact member S against the rod 2, which deteriorates the sealing performance. As described above, the detection part D can detect the passage of the foreign matter C and can detect deterioration of the sealing performance, so that the liquid leakage can be detected early. In addition, with the liquid leakage detection device, the possibility of leakage can be found early even in a state where liquid leakage does not actually occur since the liquid leakage detection device can detect deterioration of the sealing performance, and thus liquid leakage can be predicted.

The principle of detection of the deformation of the elastic portion 10 by the detection part D can be realized by using, for example, a piezoelectric element or a sensor utilizing change in electrostatic capacitance to detect deformation of the elastic portion 10 other than using the above-described sensor utilizing electric resistance of a pressure-sensitive conductive rubber. Meanwhile, the detection part D may be structured in any way as long as the detection part D can detect deformation of the elastic portion 10 from a posture in a normal state where there is no risk of liquid leakage in the shock absorber SA. Therefore, other than detecting the deformation amount itself, the detection part D may obtain information that enables the detection part D to recognize deformation from the normal state.

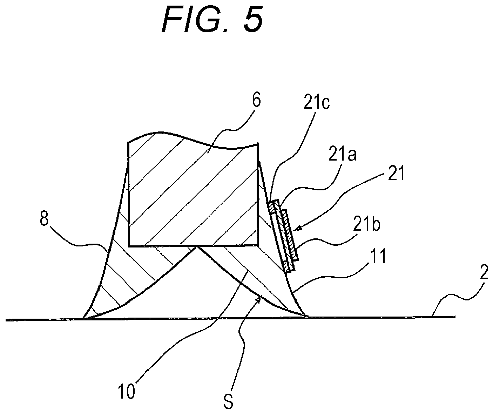

When using a piezoelectric element 20, the piezoelectric element 20 may be is mounted, for example, on the elastic portion 10 of the sliding contact member S as illustrated in Fig. 4 to transmit the elastic deformation of the elastic portion 10 to the piezoelectric element 20. The detection part D may then detect charge variance due to piezoelectric effect of the piezoelectric element 20 to detect deformation of the elastic portion 10. Alternatively, as illustrated in Fig. 5, a capacitance-type pressure sensitive sensor 21 having a sense principle of change in electrostatic capacitance may be mounted on the elastic portion 10 of the sliding contact member S to transmit the elastic deformation of the elastic portion 10 to the pressure sensitive sensor 21. The detection part D may then detect deformation of the elastic portion 10 from change in signals output from the pressure sensitive sensor 21. The pressure sensitive sensor 21 includes an insulating plate 21a, an electrode 21b affixed to the insulating plate 21a, and an annular spacer 21c that is interposed between the elastic portion 10 and the insulating plate 21a and that provides a gap from the electrode 21b. When the distance between the electrode 21b and the conductive elastic portion 10 changes due to the deformation of the elastic portion 10, the electrostatic capacitance changes. Therefore, change in electrostatic capacitance can be detected by measuring the electric charge of the electrode 21b. If reduced, since change to electrostatic capacitance indicates deformation of the elastic portion 10, deformation of the elastic portion 10 can be detected using the pressure sensitive sensor 21. Note that the piezoelectric element 20 can detect deformation of the elastic portion 10 regardless of the forming material of the sliding contact member S. Thus, the sliding contact member S can be formed from a material other than the pressure-sensitive conductive rubber. When the pressure sensitive sensor 21 is used and the conductive rubber is not used for the elastic portion 10, deformation of the elastic portion 10 that is not conductive can be detected if a conductor such as a thin metal plate is affixed to a portion of the elastic portion 10 facing the electrode 21b. When the elastic portion 10 is not a conductor, a pair of electrodes is provided on the elastic portion 10 so as to sandwich the elastic portion 10 like the annular electrodes 12 and 13 described above, change in the electrostatic capacitance due to change in the distance between the electrodes caused by deformation of the elastic portion 10 may be detected to detect deformation of the elastic portion 10. Further, the piezoelectric element 20 and the pressure sensitive sensor 21 may be formed integrally with the elastic portion 10 of the sliding contact member S. Note that deformation of the elastic portion 10 may be detected using a strain gauge that does not use a piezoelectric element. The piezoelectric element 20, the pressure sensitive sensor 21, and the strain gauge may be disposed on either the cylinder side or the opposite cylinder side of the elastic portion 10.

As described above, the liquid leakage detection device of the present invention includes the sliding contact member S that has the elastic portion 10 and is in sliding contact with the outer periphery of the rod 2, and the detection part D that detects deformation of the elastic portion 10 of the sliding contact member S. Since the liquid leakage detection device is structured in this manner, the liquid leakage detection device can detect passage of the foreign matter C adhered to the outer periphery of the rod 2 through the sliding contact member S, and can detect deterioration of the sealing performance of the main seal. Therefore, according to the liquid leakage detection device of the present invention, deterioration of the sealing performance of the main seal for sealing the outer periphery of the rod 2 can be detected. Thus, liquid leakage can be found early even in a state where liquid leakage does not actually occur, and thus liquid leakage can be predicted.

Further, in the liquid leakage detection device of this example, the elastic portion 10 is made from pressure-sensitive conductive rubber, and the detection part D is configured to detect change in electric resistance of the elastic portion 10 to detect deformation of the elastic portion 10 and detect liquid leakage based on the deformation. That is, in the liquid leakage detection device of this example, the detection part D detects deformation of the elastic portion 10 based on change in the electric resistance of the elastic portion 10, and detects liquid leakage based on the deformation. When the liquid leakage detection device is structured in this manner, deformation of the elastic portion 10 can be detected accurately, and liquid leakage can be detected accurately.

The detection part D may be configured to detect deformation of the elastic portion 10 with the piezoelectric element 20 or detect from change in electrostatic capacitance. Also with this configuration, deformation of the elastic portion 10 of the sliding contact member S can be detected, and liquid leakage can be detected.

In the liquid leakage detection device of this example, the sliding contact member S has the tip end portion 11 in sliding contact with the rod 2 on the rod 2 side of the elastic portion 10, and the tip end portion 11 side is tapered toward the rod 2 side. When the liquid leakage detection device is structured in this manner, the entire sliding contact member S including the elastic portion 10 is easily deformed due to change in the contact resistance between the rod 2 and the tip end of the tip end portion 11. Thus, liquid leakage can be detected with high accuracy.

In the liquid leakage detection device of this example, the sliding contact member S is formed from an elastic body and seals the outer periphery of the rod 2. Accordingly, the sliding contact member S functions as a main seal, and a sliding contact member need not be separately provided only for detection of liquid leakage, which can reduce cost of equipment to which the liquid leakage detection device is applied. The sliding contact member S may be a dust seal for sealing the outer periphery of the rod 2. In this case, the dust seal 8 may be formed from a pressure-sensitive conductive rubber as a sliding contact member to provide an elastic portion and a tip end portion, and the detection part D may detect deformation of the dust seal 8 to detect liquid leakage. It is needless to say that for detection of deformation of the dust seal 8, the piezoelectric element 20, the pressure sensitive sensor 21, and the strain gauge may be used.

### <Second Embodiment>

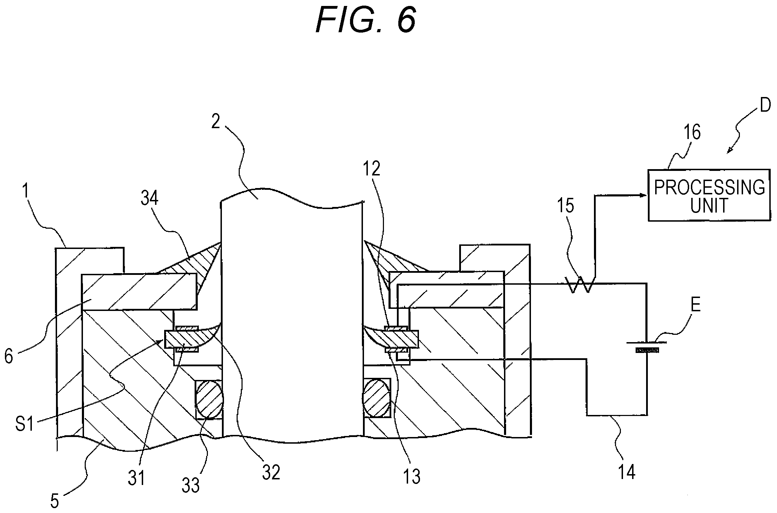

As illustrated in Fig. 6, a liquid leakage detection device according to a second embodiment includes a sliding contact member S1 and a detection part D. The sliding contact member S1 is provided on an inner periphery of an annular rod guide 5 fixed to a cylinder 1 of a shock absorber SA.

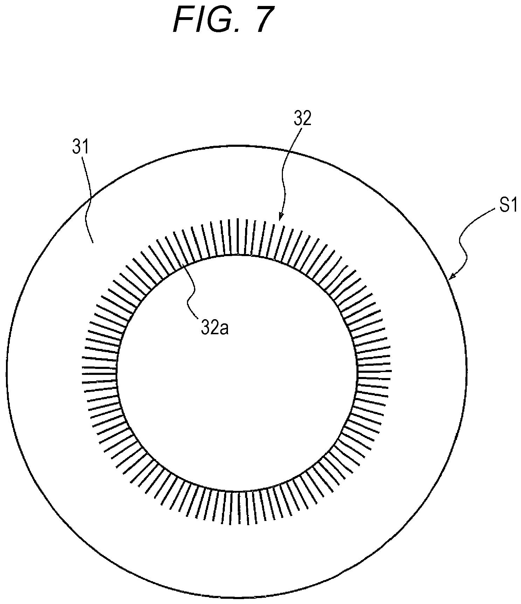

As illustrated in Fig. 7, the sliding contact member S1 includes an annular elastic portion 31 and a comb-shaped tip end portion 32 extending from the inner periphery of the elastic portion 31 toward a rod 2 side. The tip end portion 32 includes a plurality of thin teeth 32a formed by dividing the tip end portion 32 by cuts made from the base ends to the distal ends. The base ends of the teeth 32a are connected to the elastic portion 31.

The detection part D includes annular electrodes 12 and 13 mounted on both the cylinder side and the opposite cylinder side of the elastic portion 31 of the sliding contact member S1, an electric circuit 14 having a power source E that applies a voltage to the annular electrodes 12 and 13, a current sensor 15 that detects a current in the electric circuit 14, and a processing unit 16 that processes a signal output from the current sensor 15.

In the present embodiment, the sliding contact member S1 does not function as a main seal, and a main seal 33 in sliding contact with the outer periphery of the rod 2 is provided on the cylinder 1 side of the sliding contact member S1 in the axial direction. The main seal 33 prevents leakage of hydraulic oil from the inside of the cylinder 1. A dust seal 34 in sliding contact with the outer periphery of the rod 2 is provided on the opposite cylinder side of the sliding contact member S1 in the axial direction. The dust seal 34 prevents foreign matters from entering into the cylinder 1. In this case, the sliding contact member S1, the main seal 33, and the dust seal 34 are mounted in an annular groove formed in the inner periphery of the rod guide 5 and are in sliding contact with the outer periphery of the rod 2.

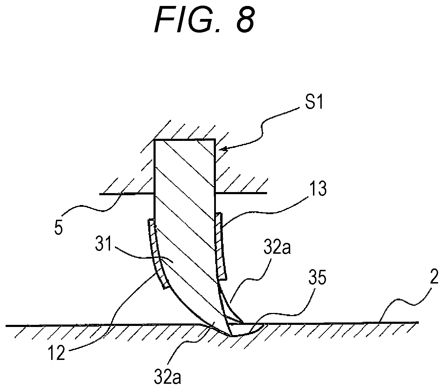

In the liquid leakage detection device structured as described above, the tip end portion 32 of the sliding contact member S1 is comb-shaped. Thus, when a recess 35 is formed due to scratch on the outer peripheral surface of the rod 2 or the like, some of the teeth 32a can enter into the recess 35 as illustrated in Fig. 8. When some of the teeth 32a enter the recess 35, the elastic portion 31 is deformed, so that the detection part D can detect this deformation. When the recess 35 is formed on the outer periphery of the rod 2 and this recess 35 faces the tip end of the main seal 33, hydraulic oil leaks from the inside of the cylinder 1 through the recess 35. As described above, when the recess 35 is formed in the outer periphery of the rod 2, the detection part D can detect the recess 35 from deformation of the elastic portion 31, so that liquid leakage can be detected. Further, when some of the teeth 32a make contact with a foreign matter C adhered to the outer periphery of the rod 2, the elastic portion 31 deforms, so that the deterioration of the sealing performance of the main seal 33 due to the foreign matter C can also be detected.

Therefore, according to the liquid leakage detection device of the second embodiment, deterioration of the sealing performance of the main seal for sealing the outer periphery of the rod 2 can be also detected. Thus, liquid leakage can be found early even in a state where liquid leakage does not actually occur, and thus liquid leakage can be predicted. Further, according to the liquid leakage detection device of the second embodiment, the tip end portion 32 is comb-shaped. Thus, the recess 35 formed on the outer periphery of the rod 2 can also be detected, so that deterioration of sealing performance due to damage of the rod 2 can be detected and liquid leakage can be found even earlier. Thus, liquid leakage can be predicted more effectively. Further, since the sliding contact member S1 is disposed between the main seal 33 and the dust seal 34, the sliding contact member S1 can be protected not only from high pressure inside the cylinder 1 but also from the environment outside the cylinder 1. In detecting deformation of the elastic portion 31, the piezoelectric element 20, the pressure sensitive sensor 21, a strain gauge, or the like can detect the deformation.

Each of the liquid leakage detection devices according to the first embodiment and the second embodiment described above is applied to the shock absorber SA. However, the liquid leakage detection device of the first embodiment and the second embodiment may be provided on the outer periphery of the rod of hydraulic equipment such as a linear actuator. Since this liquid leakage detection device can detect liquid leakage regardless of a kind of liquid, the liquid leakage detection device can be applied to hydraulic equipment in which a rod moves into/out from a cylinder other than oil pressure equipment.

Further, the tip end portions 11 and 32 may be made from a hard resin or the like as long as it does not damage the outer periphery of the rod 2. Furthermore, each of the liquid leakage detection devices according to the first embodiment and the second embodiment is disposed at the end portion of the cylinder 1. Thus, in the case where a stroke sensor or the like is provided in the shock absorber SA, wiring can be bundled with wiring of the stroke sensor, so that routing of the wiring can be easy. The processing unit 16 of the detection part D may acquire signals from the current sensor 15, the piezoelectric element 20, or the pressure sensitive sensor 21 via wireless communication.

Although the preferred embodiments of the present invention have been described in detail, modifications, variations and alternations can be made without departing from the scope of the claims.

This application claims priority based on Japanese Patent Application No. 2015-216298 filed on November 4, 2015, and the entire disclosure of which is incorporated herein by reference.

## Claims

1. A liquid leakage detection device comprising:
a sliding contact member that includes an elastic portion, is movable with respect to a cylinder filled with liquid in an axial direction, and is in sliding contact with an outer periphery of a rod movable into/out from the cylinder; and
a detection part configured to detect deformation of the elastic portion of the sliding contact member.

2. The liquid leakage detection device according to claim 1, wherein
the elastic portion is made from a pressure-sensitive conductive rubber,
the detection part is configured to detect deformation of the elastic portion from change in electric resistance of the elastic portion and detect liquid leakage based on the deformation.

3. The liquid leakage detection device according to claim 1, wherein the detection part includes a piezoelectric element that detects deformation of the elastic portion, and detects liquid leakage based on the deformation.

4. The liquid leakage detection device according to claim 1, wherein the detection part includes a pressure sensitive sensor that detects deformation of the elastic portion from change in electrostatic capacitance, and detects liquid leakage based on the deformation.

5. The liquid leakage detection device according to claim 1, wherein the sliding contact member has a tip end portion that is in sliding contact with the rod on the rod side of the elastic portion, and the tip end portion is comb-shaped.

6. The liquid leakage detection device according to claim 1, wherein the sliding contact member has a tip end portion that is in sliding contact with the rod on the rod side of the elastic portion, and the tip end portion side is tapered toward the rod side.

7. The liquid leakage detection device according to claim 1, wherein the sliding contact member is formed from an elastic body, and seals the outer periphery of the rod.

8. The liquid leakage detection device according to claim 7, wherein the sliding contact member is provided between a main seal that is in sliding contact with the outer periphery of the rod to prevent liquid leakage from the cylinder and a dust seal that is in sliding contact with the outer periphery of the rod to prevent foreign matters from entering into the cylinder.
